# EUROPEAN PATENT APPLICATION

(11) **EP 4 585 285 A1**
(43) Date of publication of application: **16.07.2025**
(21) Application number: 23862566.9
(22) Date of filing: 08.09.2023
(51) Int. Cl.: B01D 1/26, B01D 3/14, C02F 1/04, C02F 1/10, F28D 3/02, F28D 5/02

(54) **MULTIPLE-EFFECT MULTI-TRAIN DESALINATION (MEMTD) DEVICE**

(30) Priority: 08.09.2022 ES 202231457 U
(71) Applicant: WGA WATER GLOBAL ACCESS, S.L., Sispony AD400 (AD); Nomen Calvet, Juan Eusebio, Andorra, 0036349 (AD); Hanganu, Dan Alexandru, 08294 El Bruc (Barcelona) (ES)
(72) Inventor: NOMEN CALVET, Juan Eusebio, Andorra, 0036349 (AD); HANGANU, Dan Alexandru, 08294 Barcelona (ES)
(74) Representative: Elion IP, S.L.
(86) International application number: PCT/ES2023/070545
(87) International publication number: WO 2024/052583

(57) **Abstract**

The invention relates to a multiple-effect multi-train desalination (MEMTD) device, based on phase change, which comprises at least two trains of n evaporator-condenser effects, wherein each train of effects comprises at least one latent-heat exchanger in each of the evaporator-condenser effects; at least one sensible-heat exchanger (6) between every two train effects, in which sensible heat is exchanged between the brine flow (18) released from the last evaporator-condenser effect of the previous train of effects and incoming water flow (20) provided as feed water (21) to the first evaporator-condenser effect of the following train; and a last condenser (7) that condenses, at least partly, evaporated vapor (22) from the last evaporator-condenser effect of the last train of evaporator-condenser effects.

## Description

### OBJECT OF THE INVENTION

The present invention refers to a multi-effect desalination device using phase change, with at least two trains of evaporator-condenser effects and with a low thermal gradient per evaporator-condenser effect.

### BACKGROUND OF THE INVENTION

Multi-Effect Desalination devices, MED, is based on a serial process consisting of evaporation-condensation stages or effects under vacuum conditions, using residual vapor from an adjacent power plant or another vapor source as initial vapor.

Current MED devices comprise a plurality of shell and tube or chamber heat exchanger devices. One embodiment of a MED Multi-Effect Desalination or Distillation plant is formed by vertical shells with vertical or horizontal heat exchanger tubes or chambers, condensers on their inner face and evaporators on their outer face. In this configuration, the vapor condenses inside the tubes or chambers and due to the thermal exchange through the walls of the tube or chamber, the salt water, which flows over the evaporator exterior side of the tubes or chambers, evaporates. The salt-free vapor passes to the next effect and heats the inside of the tubes or chambers while condensing as desalinated water. New salt water at a lower temperature is supplied to the outside of these tubes or chambers of the next effect, which evaporates. The process is repeated successively in a series of evaporator-condenser effects, typically between 8 and 13 times.

As mentioned before, the MED device receives energy as heat from residual vapor from a vapor turbine power plant or other vapor sources, this heat is supplied to the first effect, where the temperature of the vapor supplied to the first effect is below 70°C in order to limit mineral precipitation problems; the temperature difference between the water to be evaporated and the vapor to be condensed is usually around 3°C per effect; the number of effects is usually between 8 and 13 evaporator-condenser effects; the heat recovery system throughout the multi-effect plant combines flash evaporation-condensation phenomena in the flash boxes, the phenomena of flash evaporation-condensation at the inlet of the superheated feed water to each effect and condensation of part of the vapor from each effect in the feed heaters; the heat sink located after the last effect is by condensation of the vapor evaporated in the last effect on condenser tubes through which cooling seawater circulates in a quantity greater than that of the feed water; and a recovery ratio, the proportion between the desalinated water produced and the feed seawater supplied to the first effect, of around 35%.

One problem with current MED devices is their high specific energy consumption per unit of water produced. The high specific energy consumption of current MEDs is due to the fact that: current MEDs only recycle on average about 10 times the latent heat of the vapor supplied to the first effect; it is difficult to add more than 13 effects in a train of effects because the initial temperature must not exceed 70^{o}C to avoid problems of mineral precipitation and because the greater the number of effects, the greater the salinity of the water to be treated in the last effects, the greater the thermal jump imposed by the boiling point elevation BPE of the aqueous solution to be evaporated; and greater the consumption by pumping of the large quantities of cooling seawater to be supplied to the final heat sink, which is then discharged back into the sea without being used as feed water.

The current evaporator-condenser tubes or chambers of the current evaporator-condenser effects of a MED device are heat exchangers through whose evaporator side flows a saline solution to be evaporated and through whose condenser side flows water that has condensed. If the evaporator-condenser tubes or chambers are in a vertical position, the water to be evaporated and the condensed water flow, forming a layer or film of water on the evaporator and condenser sides of each of the tubes or chambers. In some cases, tubes or chambers with corrugated walls are used to increase the heat exchange surface and to create turbulence in the downward flows of liquids, mainly to facilitate thermal convection by breaking the boundary layer and also to achieve areas of thinner liquid layers in which the resistance to heat flow conduction is lower.

In a horizontal position of the condenser evaporator tubes or chambers, the aqueous solution to be evaporated flows in a film across the evaporator exterior surface while the condensed water flows horizontally across the condenser interior surface, creating a film of water with high resistance to heat flow across the entire wall covered by the liquid flow.

It is known that the interaction of the forces of cohesion and adhesion of the water molecules with the solid surface of a container produces a curvature of the liquid-vapor interface known as a water meniscus or aqueous solution meniscus.

It is also known that a meniscus of water is divided into three regions characterized by having very different behaviors with respect to the transmission of heat through the liquid film and the solid-liquid interfacial adhesion force. These three regions are the adsorption region, the transition region, and the bulk region of the meniscus. It is known that the thickness of the liquid water film is smallest in the adsorption region, but the thin liquid film remains strongly adhered to the solid substrate due to the intermolecular forces between the liquid and the solid. In this adsorption region, the thermal resistance to conduction is small and the thermal resistance at the interface is high. In the massive region of the meniscus, due to the great thickness of the water film, the thermal resistance by conduction is great and the thermal resistance at the interface is small. In this massive region of the meniscus, the curvature of the liquid-vapor interface remains almost constant. The transition region is found between the adsorption region and the massive region of the meniscus. This transition region is characterized by low thermal resistance due to conduction resulting from the reduced thickness of the water layer and by low thermal interfacial resistance. An important reference on this subject is the article Review of the Effects of Surface Topography, Surface Chemistry, and Fluid Physics on Evaporation at the Contact Line, of which Joel L. Plawsky, of the Rensselaer Polytechnic Institute in New York, is the first author.

It is known that in water or an aqueous solution that is in contact with the solid walls of a container, a curvature of the liquid-gas interface is produced due to the effect of the outcomeant of the forces of adhesion and cohesion. It is known that, if the walls are close together, the liquid-vapor interface is curved over its entire amplitude between wall and wall. It is known that, if the walls of the container are at a greater distance than that at which the forces of adhesion of the water molecules on the walls act, then the liquid-gas interface is flat in the central area between walls and only curves in the proximity of the walls.

Absorption heat pumps, or ABHPs, are well known, and it is known that they are coupled to multi-effect desalination plants, generally referred to as ABHP MEDs. These ABHP MED desalination plants present the problem of high energy costs due to the few times the latent heat is recycled throughout the 6 to 12 effects that these configurations usually have.

Steam ejectors coupled to thermal vapor compression multi-effect desalination plants, generally referred to as TVC MED, are well known. These TVC MED installations present the problem of the high specific energy cost per unit of product, due to the few times that latent heat is recycled throughout the few effects that these configurations usually have, which have less than 13 evaporator-condenser effects, and due to the energy cost of the higher temperature vapor used as motive vapor for the ejector.

### SUMMARY OF THE INVENTION

The present invention is defined in the Claims section.

A multi-effect desalination device MED with a plurality of trains of evaporator-condenser effects, with a low gradient or thermal jump per evaporator-condenser effect, has a capacity to multiply by about three times the current capacity that multi-effect desalination or distillation plants MED achieve from a given mass flow of residual vapor and using a given flow of cooling water in the heat sink.

The multi-effect multi-train desalination device, MEMTD, uses a greater proportion of the cooling water flow in the heat sink represented by the final condenser as feed water, thus reducing the specific energy consumption for seawater pumping compared to current MED plants.

The multi-effect multi-train desalination device, MEMTD, is a phase change desalination device comprising at least one heat exchanger that we call a High Transition Region Density Heat Exchanger, HTRDHE, characterized by being composed of heat exchanger tubes or chambers in which the water condensed on the condenser side and the aqueous solution to be evaporated on the evaporator side flow within channels whose walls are in proximity, normally less than 1 mm, so that the flow of water or aqueous solution within these channels has a curved liquid-gas interface over the entire wall-to-wall amplitude, which makes it possible to achieve a high density of transition regions on the surface of the evaporator and condenser faces.

An embodiment of the HTRDHE is using evaporator-condenser tubes or chambers with a profile of the wall of the evaporator-condenser tube or chamber that in its cross-section perpendicular to the liquid flow has a sinusoidal, in a sawtooth or similar form so that the entire liquid-gas interface of the water or aqueous solution flowing inside microchannels in which the adhesion forces of the water on the side wall of the microchannel curve its liquid-gas interface across the entire width of the liquid-gas interface of the microchannel wall-to-wall.

The dimensions of the microchannels that cover, at least in part, the evaporating and condensing sides of the tubes or chambers of HTRDHE will depend on the adhesion and cohesion forces, which in turn depend on the properties of the aqueous solution, the properties of the material of the tube or chamber wall, the angle of inclination of the microchannel walls and many other factors such as the finish or treatment applied to the walls of the tube or evaporator-condenser chamber with hydrophilic or water-repellent properties.

An embodiment of a tube wall or evaporator-condenser chamber of a HTRDHE is to use marine aluminum alloys, with a profile of symmetrically alternating channels, in a sawtooth or zigzag pattern that forms microchannels both on the evaporator side and on the condenser side with a maximum depth of 1 mm and a maximum distance between peaks or vertices of the microchannel of 1 mm.

To achieve an evaporation and condensation cycle, a HTRDHE operates with a thermal jump or temperature difference between the aqueous solution to be evaporated on the evaporating side of the evaporator-condenser tube or chamber and the temperature of the secondary water vapor to be condensed on the condensing side of the evaporator-condenser tube or chamber less than or equal to 0.3^{o}C plus the boiling point elevation, BPE, corresponding to the salinity and temperature of the aqueous solution to be evaporated. In the case of seawater, this temperature difference of 0.3^{o}C plus the elevation of the boiling point outcomes in a temperature difference of less than or equal to 1^{o}C compared to the 3^{o}C that are usually required in the heat exchangers of current MED devices. Thus the outcome achieved with the HTRDHE is a low temperature differential between the aqueous solution to be evaporated and the condensed fresh water and this is due to the structure of the tube wall of the evaporator-condenser chamber in which the forces of cohesion and adhesion of the water molecules position the flow of the aqueous solution to be evaporated from the evaporator side of the tube or evaporator-condenser chamber and position the flow of condensed water on the condensing side of the tube or evaporator-condenser chamber so that the liquid-gas interface is curved over the entire flow amplitude between the walls of each microchannel and a high density of transition regions is achieved on the evaporating surface and on the condensing surface.

The outcome of positioning the liquid flows between microchannel walls in such a way that the adhesion and cohesion forces maintain the curvature of the liquid-gas interface throughout the entire width, from wall to wall, of the microchannel is to achieve a high surface density of water in the transition region on both the evaporator and condenser sides. To achieve a high density of transition regions simultaneously on both the evaporator and condenser sides of the wall of the heat exchanger, at least one tube or evaporator-condenser chamber, has the profile of the section normal to both the flow of the saline solution to be evaporated and the flow of the condensate, in a symmetrically alternating pattern in which the evaporator meniscus of the evaporator side is alternately inverted in relation to the condenser meniscus of the condenser side and so on along the perimeter of the evaporator-condenser tube or chamber, so that the distances between the transition regions of the evaporator menisci and the condenser menisci are minimal.

The at least one HTRDHE of each evaporator-condenser effect is characterized by having evaporator-condenser tubes or chambers with a wall design in which, in cross-section, the wall is alternating, so that the evaporator meniscus is reversed, rotated 180^{o}, forming an inverse symmetry with the condenser meniscus and this structure juxtaposes or places in proximity a transition region of an evaporator meniscus with a transition region of a condenser meniscus or with a waterless region of the condenser surface, so that the flow of latent heat of condensation released on the water-free surface of the condensing side or released on the transition region of a condensing meniscus of the condensing side flows through the wall of the condensing-evaporating tube or chamber to the transition region of an evaporating meniscus of the evaporating side where the heat flow is transformed, at least in part, into latent heat of evaporation. This design of evaporator-condenser tubes or chambers with alternating channels positions the evaporator menisci in inverse symmetry with the condensers and this structure allows for a high density of transition regions and allows for a transition region of the evaporator meniscus to be in proximity to a transition region of the condenser meniscus and creates a passage for latent heat exchange through the wall of the condenser evaporator tube or chamber with high heat flow, low thermal resistance and low temperature gradient between the aqueous solution to be evaporated and the vapor that condenses.

The multi-effect multi-train desalination device, MEMTD, uses a residual vapor source below 70^{o}C like the one used by current MED plants, although the specific mass flow consumption of vapor per unit of product water is reduced to a third of the specific mass flow consumption of external vapor of current MED desalination plants.

The multi-effect multi-train desalination device, MEMTD, comprises at least two trains of n evaporator-condenser effects and with at least one sensible heat exchanger for aqueous solutions between two successive trains.

In one embodiment, the MEMTD multi-effect multi-train desalination device, with vapor entering the first effect at below 70^{o}C and vapor at around 37^{o}C condensing in the final heat sink, is made up of three trains of 10 evaporator-condenser effects each train, with a temperature difference between the water to be evaporated and the vapor to be condensed of less than 1^{o}C per evaporator-condenser effect and with at least a sensible heat exchanger between two successive trains of effects and with a decrease in sensible heat exchange of less than 2^{o}C, and this embodiment makes it possible to multiply the production of product water that a current MED plant produces per unit of energy supplied to the system as residual vapor supplied to the first effect and of cooling seawater pumped to the heat sink of the last effect.

The configuration of a multi-effect multi-train desalination device, MEMTD, of at least two trains of evaporator-condenser effects with a sensible heat exchanger between two successive trains of evaporator-condenser effects allows the latent heat to be recycled and allows the salinity level of the feed water in each effect to be maintained at an optimum level, even if the total number of effects in the plant is 30 evaporator-condenser effects. In the at least one sensible heat exchanger between two successive trains of n evaporator-condenser effects, the flow of brine leaving the last evaporator-condenser effect of the preceding train exchanges sensible heat with a flow of new feed water that is supplied to the first evaporator-condenser effect of the following train. The temperature loss between the temperature of the incoming brine flow from the last evaporator-condenser of the previous train and the temperature of the outgoing flow of the new feed water supplied to the first evaporator-condenser of the following train will be lower the greater the exchange surface in the sensible heat exchanger and the better its heat transfer properties, with a temperature difference of less than 2^{o}C.

In another embodiment, the multi-effect multi-train desalination device, MEMTD, is coupled to an absorption heat pump vapor compressor, AB MEMTD. This increases the amount of water produced, in exchange for using waste steam of higher energy, but with a final total outcome of lower specific energy consumption per unit of product.

In another embodiment, the multi-effect multi-train desalination device, MEMTD, is coupled to a thermal vapor compressor by ejector, TVC MEMTD. This increases the amount of water produced, up to twice the product per mass unit of vapor supplied to a MEMTD without TVC, in exchange for using residual vapor of higher exergy, but with a final total outcome of a lower specific energy consumption per unit of product.

Taking into account that per capita electricity consumption is between 13 and 30 kWh/day and taking into account that the residual vapor from a vapor electric turbine, whether from a nuclear power plant, a hydrocarbon combustion plant or a concentrated solar plant, is around 1 kg/kWh of electricity produced, it turns out that with the 13 to 30 kg/day of residual vapor per capita, with the coupling of a multi-effect multi-train desalination plant, MEMTD, it is possible to generate between 390 and 900 l/day of desalinated water per person consuming electricity generated with a vapor turbine, amply satisfying the needs for drinking water per capita at a low specific energy cost. In the case of coupling with an AB MEMTD plant or a TVC MEMTD plant, between 780 and 1,800 l/day of desalinated water are generated per person consuming electricity generated by a vapor turbine.

### BRIEF DESCRIPTION OF THE FIGURES

A more detailed explanation of the invention is given in the following description based on the attached figures:
FIG. 1 shows in a longitudinal section diagram the three regions of an evaporator meniscus in proximity to the three regions of a condenser meniscus and highlights the properties of heat flow from a condenser transition region to an evaporator transition region in proximity;
FIG. 2 shows in a longitudinal section diagram the three regions of an evaporator meniscus in proximity to the three regions of a condenser meniscus and highlights the properties of heat flow from a condenser transition region and from a water-free zone of the condenser face to an evaporator transition region, located in proximity;
FIG. 3 shows a diagram of a multi-effect multi-train desalination device, MEMTD, consisting of three trains of evaporator-condenser effects and their inter-train sensible heat exchangers;
FIG. 4 shows a diagram of a multi-effect multi-train desalination device coupled to an absorption heat pump compressor, ABHP MEMTD;
FIG. 5 shows a diagram of a multi-effect multi-train desalination device coupled to a thermal vapor compressor, TVC MEMTD; and

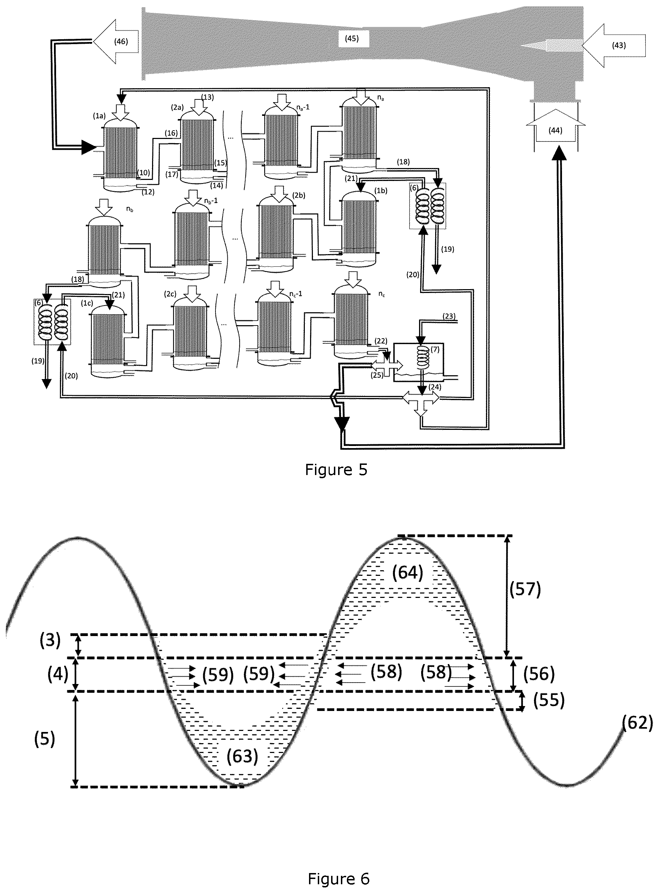

FIG. 6 shows a cross-sectional diagram, perpendicular to the flow of aqueous solution of the evaporator side and water of the condenser side, of a section of the wall of an evaporator-condenser tube or chamber of a HTRDHE, with an alternating design of the wall of the evaporator-condenser tube or chamber, following an even function symmetry pattern in which an evaporator meniscus is rotated about 180^{o}, in inverse symmetry with respect to each of the two adjacent condenser menisci and the proximity of the microchannel walls of the evaporator side and the condenser side achieves the curvature of the liquid-gas interface, throughout the width of the microchannel from wall to wall, of the water flow of the condensing surface and of the flow of aqueous solution of the evaporating wall, achieving a high density of transition regions on the surface of the evaporating surface and of the condensing surface and achieving a high density of areas of high heat flow from the evaporating surface to the condensing surface that outcome in a high coefficient of latent heat transfer of the latent heat exchanger, per unit of surface area and Kelvin degree of temperature difference.

### DETAILED DESCRIPTION OF THE INVENTION

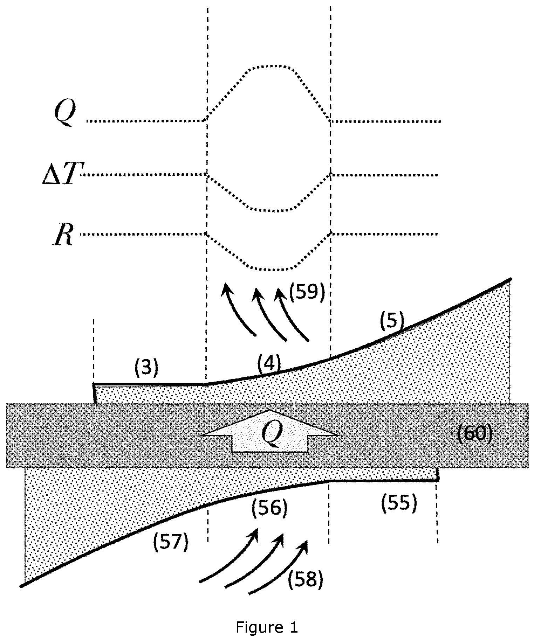

A multi-effect multi-train desalination device, MEMTD, comprises at least two trains of chambers or successive evaporator-condenser effects where each evaporator-condenser effect comprises, in turn, at least one heat exchanger that we call a HTRDHE and two successive trains are thermally interconnected by a sensible heat exchanger. Now referring to FIG. 1, which shows a curvature of the liquid-gas interface or a liquid meniscus of an aqueous solution to be desalinated on an evaporating side of the at least one HTRDHE that is divided into three regions: the adsorption region 3 where the thin liquid film is held tightly to the solid substrate 60 by the intermolecular forces between the liquid and the solid, in this adsorption region 3 the thermal resistance by conduction is small and the interfacial thermal resistance is large so that evaporation is almost non-existent in this adsorption region 3, the massive region 5 of the meniscus with a high thermal resistance by thermal conduction due to the thickness of the water layer and in which the thermal interfacial resistance is small, and the transition region 4 which is characterized by having the lowest aggregate thermal resistance and allowing the greatest flow Q of heat per unit surface area.

Referring to FIG. 1, which also shows a curvature of the liquid-gas interface or a meniscus of condensed water on the condensing face of the HTRDHE, the transition regions are divided into three regions: the adsorption region 55, the massive region 57 of the meniscus and the transition region 56. By placing transition regions 4 and 56 in proximity, on either side of the wall 60 of the evaporator-condenser tube or chamber of a HTRDHE, a heat flow exchange passage Q is achieved whereby the latent heat released by the vapor 58 condensed on the condenser transition region 56 flows with low thermal resistance and a low thermal gradient towards the evaporator transition region 4 where the energy Q is absorbed, at least in part, as latent heat of evaporation for the vapor 59 evaporated from the evaporator face.

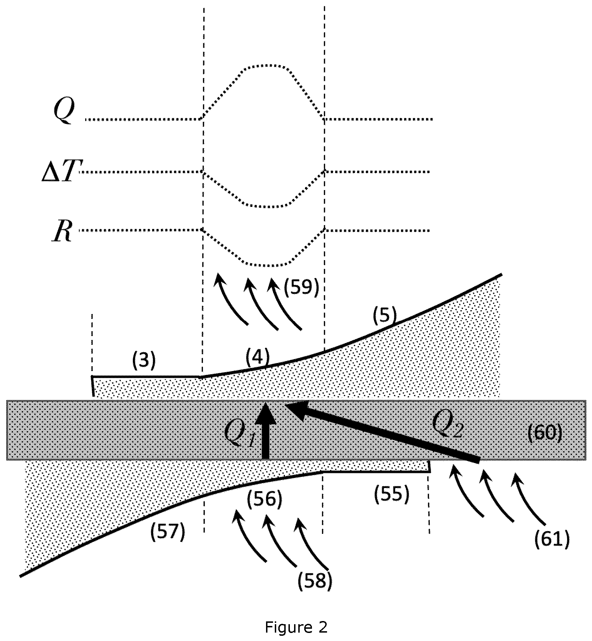

As shown in FIG. 2, on the evaporator side there may be water-free zones where the vapor 61 condenses directly on the condenser side of the wall 60 of an evaporator-condenser tube or chamber. These water-free zones are produced by the design of the condensing surface with zones partially coated with a water-repellent layer that quickly repels the droplets formed by condensation. They also occur because of of the effects of free or forced dynamic oscillations in the flow of condensed water within the condensing structure and are also produced by the design of microchannels with a depth greater than the height of the flow of condensed water.

The proximity of the evaporator transition regions to the condenser transition regions and to areas of the condenser face without water creates channels of high heat flow Q₁, Q₂ and low thermal resistance. A high density of transition regions on the condenser and evaporator faces achieves a high heat transfer coefficient per unit surface area and unit temperature gradient, which allows operation with low temperature differentials in each evaporator-condenser effect. Likewise, the design of the condensing surface with microchannels ensures the orderly passive drainage of condensed water by capillarity within the microchannels, ensuring the existence of surfaces free of thermally insulating water films.

FIG. 6 shows schematically a cross-section, perpendicular to the flow of aqueous solution of the evaporating face and the flow of condensed water on the condensing face, of a segment of wall 62 of a tube or an evaporator-condenser chamber of a HTRDHE showing the curved profile of the liquid-gas interface of the saline solution 63 to be evaporated flowing inside a microchannel of the evaporator face, with curvature of the liquid-gas interface throughout the amplitude from to the wall of the microchannel, and the curved profile of the liquid-gas interface of the condensed water flow 64 that flows inside a microchannel of the condensing face, with curvature of the liquid-gas interface across the entire width from wall to wall of the microchannel. The curvature of the liquid-gas interface across the microchannels that cover, at least in part, the evaporating face and through which the saline solution to be evaporated flows 63 achieves a high density of transition regions 4 in the curvature of the liquid-vapor interface of the saline solution to be desalinated and with the consequent high density of zones with a high flow of latent heat of evaporation that absorbs the evaporated vapor 59. The curvature of the liquid-gas interface across the microchannels that cover, at least in part, the condensing face and through which the condensed water flows 64 achieves a high density of transition regions 46 in the curvature of the liquid-vapor interface of the condensed water and with the consequent high density of areas with a high flow of latent heat of condensation 58.

The sinusoidal form of the wall 62 allows for the alternating in successive inversions, with 180^{o} rotations, an evaporating meniscus 63 and a condensing meniscus 64 in inverse symmetry, so that the condensing transition region 56 of a condensing meniscus 64 where condensation takes place releasing latent heat of condensation of the vapor 58 with a greater flow of energy per unit of surface, is close to an evaporating transition region 4 of an evaporating meniscus 63 absorbing latent heat of evaporation for the evaporated vapor 59 with a greater flow of absorbed energy per unit of surface area. The high density of transition regions that occur in this alternating structure of evaporating microchannels and condensing microchannels or another structure as a saw tooth, zigzag or similar structure make it possible to achieve a high density of high-flow paths Q₁ of energy as latent heat released in the condensing transition region 56 or and a high density of high-flow paths Q₂ of energy as latent heat released on a water-free surface of the condensing side on which vapor condenses 61, flowing to the evaporating transition region 4 of the evaporating side where energy is absorbed as latent heat of evaporation 59.

One way of making the evaporator-condenser latent heat exchanger tubes or chambers with a sinusoidal, zigzag, sawtooth or similar wall 62 is by extruding aluminum alloys or by stamping them to form microchannels 1 mm deep and 1 mm wide from crest to crest of each microchannel. A depth greater than or equal to 1 mm allows for greater flow rates and allows for longer evaporator-condenser tubes or chambers. A microchannel depth of less than 1 mm reduces the width of each channel and, consequently, increases the number of channels per unit perimeter of the evaporator-condenser tube or chamber and increases the density of transition regions per unit surface area of the evaporator-condenser tube or chamber. For microchannel widths greater than 1 mm, as the width of the microchannels increases, flat, non-curved areas of the liquid-vapor interface appear, the density of transition regions is reduced and the efficiency of the heat exchanger is reduced. In these flat areas of the liquid-vapor interface, the transmission of latent heat from both evaporation and condensation is very inefficient, which penalizes the efficiency of the latent heat exchanger. The sinusoidal form is modified with a profile of angled ends, creating a zigzag form, or with flat ends, creating a crenellated form, instead of rounded ends of the sinusoidal form.

The high density of transition regions is unattainable with current double-fluted, double-floated evaporator-condenser tubes or chambers, designed to create turbulence in downward water flows since these tubes would form large areas of flat liquid-gas interface, and it is unattainable with tubes fluted or grooved on one side only.

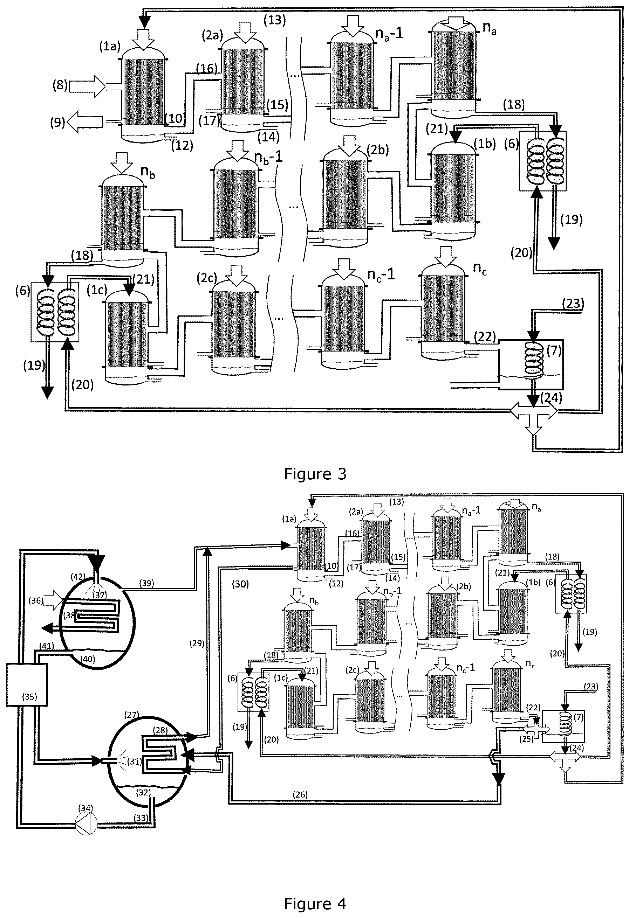

As illustrated in FIG. 3, one embodiment of the multi-effect multi-train desalination device, MEMTD, comprises an arrangement of vertical shells, with vertical exchanger tubes or chambers with the evaporator face on the inside and the condenser face on the outside.

In another embodiment of the multi-effect multi-train desalination device, MEMTD, the shells are horizontal with horizontal tubes or chambers with the evaporator side inside and the condenser side outside.

In another embodiment of the multi-effect multi-train desalination device, MEMTD, the horizontal or vertical shells comprise heat exchanger tubes or chambers with the evaporator side outside and the condenser side inside.

In each evaporator-condenser effect there is at least one heat exchanger with a high density of transition regions.

As shown in FIG. 3, one embodiment of the multi-effect multi-train desalination device, MEMTD, comprises three trains of effects: a, b and c, and every two consecutive trains of effects are connected by a sensible heat exchanger 6.

In another embodiment, the multi-effect multi-train desalination device, MEMTD, incorporates devices from traditional MEDs for heat transfer between fluids: feed heater, for heat exchange between the released vapor and the feed water flow, flash box, for vapor generation by reducing the temperature of the condensate and flash of the superheated feed liquid at each effect.

The multi-effect multi-train desalination device, MEMTD, comprises at least one sensible heat exchanger 6 at the end of each train except in the case of the last train, c, in which the last condenser evaporator effect n_{c} is connected to the final condenser 7. The at least one sensible heat exchanger 6 between two trains of evaporator-condenser effects exchanges the sensible heat of the outgoing brine flow 18 of the last effect nₐ and n_{b} of the preceding train of effects which, after passing through the sensible heat exchanger, is returned 19 to the environment, with an incoming flow of preheated seawater 20 from the final condenser 7 and which, after passing through the at least one, sensible heat exchanger 6 is supplied as feed water 21 to the first effect of the following train of effects 1_{b} and 1_{c} at a temperature that is at least equal to the temperature of the brine 18 of the last effect nₐ, n_{b}, of the preceding train minus 2^{o}C.

The succession of effect trains connected with sensible heat exchangers allows in this configuration up to 30 effects placed in three trains of 10 evaporator-condenser effects in each train, between the residual vapor source 8 at less than 70^{o}C and the final condenser 7 which usually works at a temperature of around 37°C, so that the recovery ratio, the ratio between the mass of water produced and the mass of feed water, is maintained at the traditional levels of MEDs of around 35%, it is possible to recycle most of the sensible heat between two trains of effects and 100% of the latent heat is recycled between two effect trains, which allows the specific consumption of energy contributed as heat to the system per unit of water produced to be reduced to 1/3, in comparison with current MEDs.

The first effect of the first train 1to the receives the residual vapor flow 8 from a vapor turbine of an electricity generating plant or a vapor generating facility, at a temperature below 70^{o}C to avoid mineral precipitation on the evaporator side and returns the condensed water 9 to the generating plant to generate new vapor, as with current MED. The vapor output 10 generated in the first effect and the brine output 12 generated in the first effect are managed as in current MEDs with the corresponding heat recycling processes.

The following effects, 2 to n-1, of each train of effects receive water vapor 16 from the outlet of the preceding effect 10, receive brine 12 from the preceding effect which is used as feed water 13, product water 17 and brine 14 are extracted from them and the new vapor 15 is supplied to the condenser of the next evaporator-condenser effect, as in a traditional MED device.

The vapor output 22 of the last effect n_{c} of the last train c of effects is connected to a final condenser or heat sink 7 in which the vapor 22 of the last effect n_{c} of the last train c of effects is condensed against heat exchanger tubes or chambers through which cooling seawater 23 at ambient temperature flows. The cooling seawater 24 leaves the condenser 7 at a higher temperature than the ambient temperature and is distributed, at least in part, as feed water to the three effect trains *a,* b and c. It is possible to supply more water 23 to the final condenser 7 than is required by the three evaporator-condenser effect trains as feed water in order to save CAPEX on the final condenser, but then the cost of pumping water 23 is higher and the energy efficiency of the plant decreases.

The multi-effect multi-train desalination device, MEMTD, in a configuration of three trains of effects and ten evaporator-condenser effects per train recycles the latent heat between evaporator-condenser effects of a train, recycles the sensible heat between two consecutive trains of effects, recycles as feed water of the three trains of effects up to all the cooling water 23 supplied to the final condenser 7, works with recovery ratios at the same level as current MEDs, uses all current knowledge in heat recycling between the MED fluids, reduces the specific heat consumption per unit of water produced by up to a third, reduces the specific electricity consumption per unit of product water for pumping final condenser cooling liquid by around a third and desalinates seawater of 40,000ppm with an electricity consumption of less than 1.2kWh/m³ of product and recycling residual vapor at 70^{o}C from a vapor turbine power plant that, without the coupling of the MEMTD desalination plant, would have to expel the vapor into the atmosphere at a temperature of over 100^{o}C with the corresponding loss of exergy.

As illustrated in FIG. 4, alternatively, the multi-effect multi-train desalination device, MEMTD, comprises three trains of effects: *a,* b and c, connected by two sensible heat exchangers 6 and coupled to at least one absorption heat pump ABHP, creating a multi-effect, multi-train absorption pump desalination device, MEMTD. A fraction of vapor 25 of up to 50% of the vapor evaporated 22 in the last effect n_{c} of the last train c is supplied 26 inside the casing of the at least one absorber 27 of the absorption heat pump, where it hydrates an aqueous solution of lithium bromide 31 supplied inside the casing of the at least one absorber 27 of the absorption heat pump. This absorption process releases energy from the condensation of the supplied vapor 26, which is absorbed by the condensed water 30 of the first effect 1ₐ of the first train a when circulating inside heat exchanger tubes 28 inside the absorber 27, which evaporates generating vapor 29 and is supplied to the first effect 1ₐ of the first train a. The lithium bromide hydrate 32 is extracted from the absorber 27 through an outlet pipe 33 connected to a pump 34 that drives the lithium bromide hydrate through at least one sensible heat exchanger 35 where the hydrated lithium bromide solution 32 absorbs sensible heat from the dehydrated solution 40 which, through a drain pipe 41, leaves the at least one generator 42 of the absorption heat pump. The aqueous solution of lithium bromide, hydrated and heated through the sensible heat exchanger 35. The lithium solution 37 is supplied to the evaporator-condenser tubes 38 of the at least one generator 42. Inside the evaporator-condenser tubes 38, residual vapor 36 supplied at around 100^{o}C from the vapor turbine power plant condenses and the concentrate is returned to the power plant to generate more vapor. The lithium bromide solution 37 releases vapor which is piped 39 as vapor for the first effect 1ₐ of the first train of a. This ABHP MEMTD configuration of three trains of ten evaporator-condenser effects coupled to an absorption heat pump makes it possible to achieve a product water mass flow rate of up to sixty times the mass flow rate of external vapor 36 supplied to the desalination plant.

As illustrated in FIG. 5, another embodiment of the multi-effect multi-train desalination device, MEMTD, comprises three trains of effects: *a,* b and c, connected by two sensible heat exchangers 6 and coupled to at least one vapor ejector compressor 45, creating a thermal vapor compression multi-effect multi-stage desalination device TVC MEMTD. A fraction of vapor 25 of up to 50% of the vapor evaporated 22 in the last effect n_{c} of the last train c is supplied 44 as suctioned vapor to at least one ejector 45 to which external motive vapor 43 is supplied and the ejector generates resulting vapor 46 at the temperature and pressure of the first effect 1ₐ of the first train a.

In another embodiment of a multi-effect, multi-train desalination device with thermal vapor compression TVC MEMTD, it comprises more than one ejector at the end of each train or placed between effects of a train.

The TVC MEMTD configuration of three trains of ten evaporator-condenser effects coupled to at least one vapor ejector 45 makes it possible to obtain a product water mass of up to sixty times the mass of external vapor 43 supplied to the desalination plant as motive vapor for the ejector.

## Claims

1. A multi-effect multi-train desalination device, MEMTD, by phase change, **characterized in that** the desalination device comprises at least two trains of n evaporator-condenser effects, each train of evaporator-condenser effects comprises at least one latent heat exchanger in each of the evaporator-condenser effects, at least one sensible heat exchanger (6) between every two trains of effects in which sensible heat is exchanged between the brine flow (18) at the outlet of the last evaporator-condenser effect of the preceding train of effects and the incoming water flow (20) which is supplied as feed water (21) to the first evaporator-condenser effect of the following train and a final condenser (7) which condenses, at least in part, the vapor evaporated (22) from the last evaporator-condenser effect of the last train of evaporator-condenser effects.

2. Desalination device according to claim 1, wherein the at least one latent heat exchanger in each evaporator-condenser effect is a HTRDHE by having the evaporator side covered, at least in part, of microchannels through which the saline solution to be evaporated flows with the liquid-gas interface curved across the entire width from wall to wall of the microchannel and by having the condensing face covered, at least in part, by microchannels through which the condensed water flows with the liquid-gas interface curved across the entire width from wall to wall of the microchannel.

3. Desalination device according to claim 2, wherein HTRDHE is a HTRDHE **characterized in that** the transition region (4) of a meniscus or curvature of the liquid-gas interface of the evaporating face is in proximity to the transition region (56) of a meniscus or curvature of the liquid-gas interface of condensed water on the condensing surface or a water-free zone on the condensing surface in which vapor condenses (61) and a rapid latent heat transfer pathway is created in which the flow of energy in the form of latent heat released by the vapor (58) condensed on the condensing transition region (56) of the condensing surface or by the vapor 61 condensed on a water-free zone of the condenser face flows with low thermal resistance, with a low temperature gradient and with a high heat flow through the wall 60 of the condenser evaporator tube or chamber to the evaporator transition region (4) of the evaporator face where the energy flow is transformed, at least in part, into latent heat of evaporation of the evaporated vapor (59).

4. Desalination device according to claim 2 or 3, wherein at least one train of condenser evaporator effects is coupled to at least one absorption heat pump wherein a portion of the vapor (25) evaporated in the last condenser evaporator effect of at least one train of condenser evaporator effects is supplied (26) to the absorber (27), where water vapor (36) from an external steam source is supplied into at least one condenser tube (38) of the generator (42) of the at least one absorption heat pump and the condensed water is returned to the external steam generating plant, where the generator generates water vapor (39) which is supplied as part of the water vapor supplied to the first effect of at least one train of evaporator-condenser effects. at least one train of evaporator-condenser effects.

5. Desalination device according to claim 2 or 3, wherein at least one train of evaporator-condenser effects is coupled to at least one steam ejector (45), where part of the vapor (25) evaporated in at least one effect is partly supplied as vapor sucked (44) from the at least one ejector (45) which receives motive steam (43) from an external source producing resulting steam (46) which is supplied as input steam to a previous effect.
